# EUROPEAN PATENT APPLICATION

(11) **EP 1 675 328 A1**
(43) Date of publication of application: **28.06.2006**
(21) Application number: 05024873.1
(22) Date of filing: 15.11.2005
(51) Int. Cl.: H04L 12/58, H04M 3/53

(54) **System and method for storing personal messages**

(30) Priority: 21.12.2004 US 19752
(71) Applicant: Alcatel, 75008 Paris (FR)
(72) Inventor: Skoog, Frederick H., 76034 Colleyville Texas (US)
(74) Representative: Schäfer, Wolfgang

(57) **Abstract**

Disclosed are systems and methods that provide a messaging service application for a user subscribed to a mobile phone service with a personal productivity platform for capturing and transmitting information. Subscribed users can initiate the messaging service application automatically or manually. Upon initiation, the messaging service application can then receive and record voice messages, and translate and process them by converting voice messages into text messages. Furthermore, it can further process the messages by accepting additional distribution commands defined by the user either manually or verbally. The processed message is then transmitted to the mobile network. An application/media server, associated with the mobile network, then takes the processed messages and relays them to a user-defined application, such as the user's email or the user's calendar.

## Description

### Field of Activity

This disclosure relates in general to devices for making notations, and more specifically to a personal productivity platform that can capture and transmit information via a user's mobile communication device.

### Background

Oftentimes after completing a telephone call there is a need to capture information as a result of the communication that took place during the call. This is particularly difficult when the device used to make the phone call was a mobile phone. The existing solutions include finding a piece of paper and writing the information down, or entering the information into an electronic information device, such as a personal digital assistant (PDA) or a personal laptop computer. These options are particularly difficult when the user is mobile, such as when driving or running through the airport, and it is not easy to stop and spend the time necessary to take down the information. In addition, it is also easy to forget the information when the user is in an environment where he cannot concentrate or capture his thoughts. Furthermore, there is also the possibility that the information written down on the particular piece of paper will be misplaced or that the PDA or the laptop computer may crash such that the information may be forever lost. Accordingly, what is needed is a means for capturing desired information after the termination of a mobile communication that does not suffer from the deficiencies found with conventional approaches.

### Brief Summary

Disclosed are systems and methods that provide a messaging service application for a user subscribed to a mobile phone service with a personal productivity platform for capturing and transmitting information. Subscribed users can initiate the messaging service application automatically or manually via a mobile network call or manually via placing a call through the fixed telecommunications network. Upon initiation, the messaging service application can then receive and record voice messages, and translate and process them by converting voice messages into text messages or electronic voice files that can be attached to text messages. Furthermore, it can further process the messages by accepting additional distribution commands defined by the user either manually or verbally. The message service application that resides within an application media server associated with the mobile network, then takes the processed messages and relays them to a user-defined application, such as the user's email or the user's calendar.

In one embodiment of such a personal messaging system, the system includes one or more mobile communication devices having mobile service provided via a communication network. In addition, this embodiment of the system includes a messaging service application connected to the mobile communication network, where the messaging service application is configured to receive a verbal service message from a user via the one or more mobile communication devices in response to the termination of a mobile communication on the one or more mobile communication device by the user. Furthermore, the messaging service application is further configured to deliver the service message to the user at a later time.

In another aspect, a method of providing personal messaging is also disclosed. In one embodiment, such a method may include the sending of a mobile communication by a user with the mobile communication device, and then terminating the mobile communication. Moreover, in such embodiments, the method would provide receiving a service message from the user via the mobile communication device in response to the terminating of the mobile communication, and delivering the service message to the user at a later time.

### Brief Description of the Drawings

FIGURE 1A illustrates one embodiment of an environment for a personal productivity platform employing a messaging service application as disclosed herein;
FIGURE 1B illustrates one embodiment of a process flow for the personal productivity platform illustrated in FIGURE 1A; and
FIGURE 2 illustrates an example of how a user might use a personal productivity platform constructed in accordance with the disclosed principles.

### Detailed Description of the Embodiments

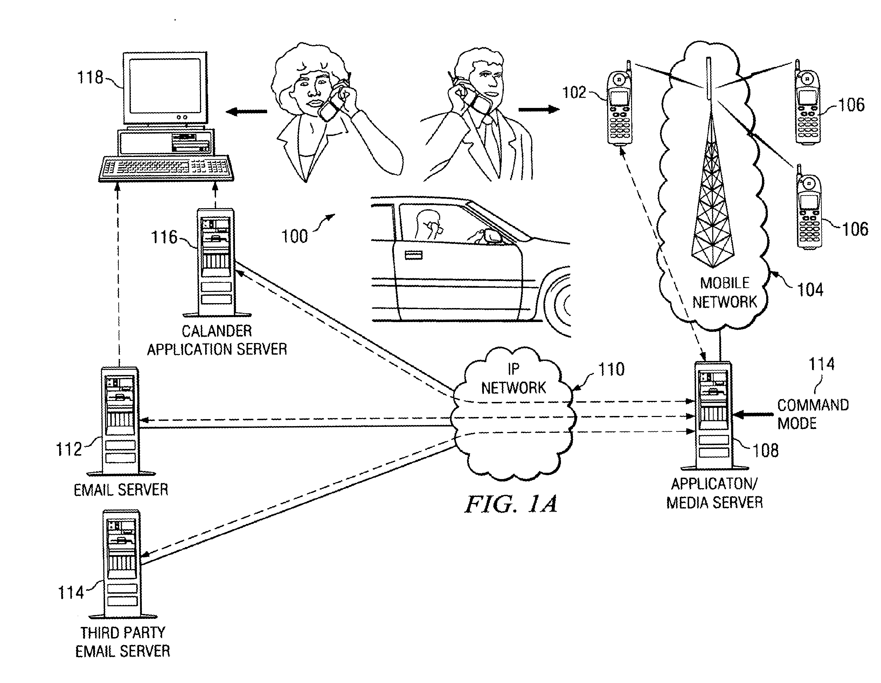

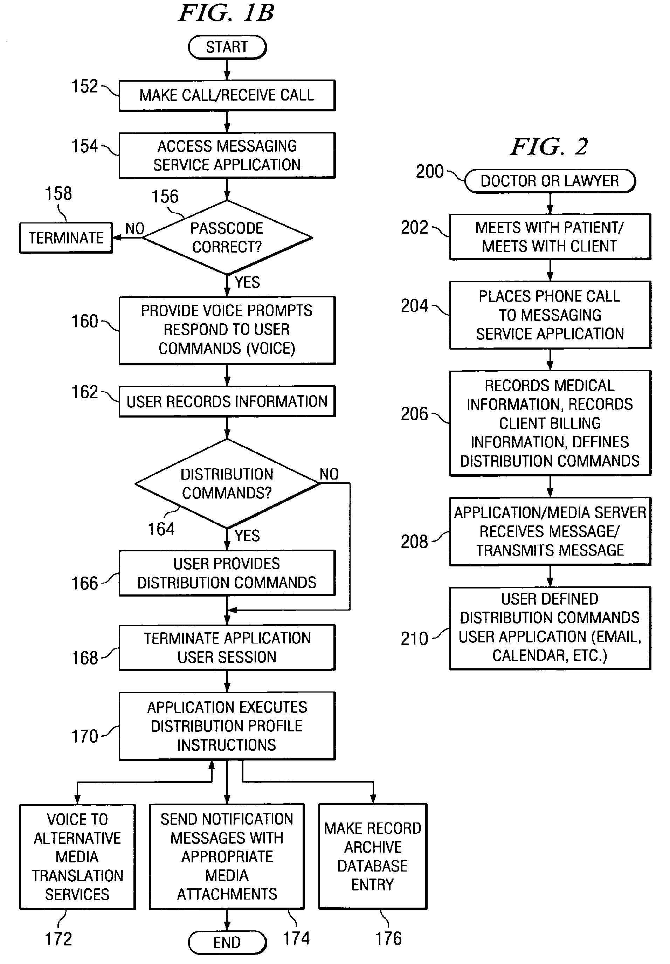

Initial reference is made concurrently to FIGURES 1A and 1B, where **FIGURE 1A** illustrates one embodiment of a personal productivity platform employing a message service application according to the disclosed principles. FIGURE **1B** illustrates one embodiment of a process flow for the personal productivity platform illustrated in FIGURE 1A. A user 100 has a mobile phone 102 and is subscribed to a mobile phone network 104. The mobile phone network 104 provides mobile phone signals and services to one or more other mobile phones 106. After completing a telephone call with the mobile phone 102, as seen in Block 152 of FIGURE 1B, and acquiring information that may be easily forgotten, such as appointments made, telephone numbers for important contacts, directions, lists of items, general ideas, and things to be done at specific times, the user 100 can manually initiate a messaging service application with his mobile phone (Block 154 of FIGURE 1B) by, for example, double clicking the "end call" button on the mobile phone 102. In some embodiments, this may be a new handset function for the phone. The user 100 may also access the messaging service application for simply storing ideas and thoughts after a brainstorming session or to leave a personal reminder message.

The messaging service application may be hosted on an application/media server 108 connected to the mobile network 104, or may be embedded within the mobile network 104 itself. In addition to double-clicking the "end call" button on the mobile phone 102, the user 100 can also manually access the messaging service application by dialing a pre-determined telephone number, by dialing a pre-defined feature code, or by speaking an access command, for example, at the end of a telephone call. Furthermore, the messaging service application may also be configured or programmed to initiate or launch automatically at the end of a telephone call. Of course, other means for activating the messaging service application are also envisioned.

Once the messaging service application is initiated or accessed, the user 100 may be prompted for a user passcode (Block 156 of FIGURE 1B) or other secure user authentication means, such as voice recognition. If the user passcode is inputted incorrectly, the messaging service application will terminate 110 and the user will be denied further access to the messaging service application, as shown in Block 158 of FIGURE 1B. If the user passcode is inputted correctly, the messaging service application will continue and begin to accept the user's input commands, such as voice requests and service messages having the information to be stored. The messaging service application can operate at various levels of difficulties ranging from novice to expert command modes 114 depending on the user's comfort level with the messaging service application, and even based on the complexity of the functions available through the application. Furthermore, the messaging service application will also provide voice prompts and respond to commands from the user 100 usually through voice commands, as illustrated in Block 160 of FIGURE 1B.

Once prompted, the user 100 can then begin by recording a service message, such as voice messages, voice requests, voice commands, or even image or video messages from video enabled mobile devices, with this service message information stored within the messaging service application, as shown in Block 162 of FIGURE 1B. In addition to receiving and recording these service messages, the messaging service application also accepts optional distribution commands, as shown in Block 164. Such optional distribution commands may be defined by the user and may include additional functions, such as alternative methods and modes of delivery of the recorded information. Examples of such distribution commands and their use are discussed in greater detail below.

Once the voice messages have been received and recorded (Block 162) and the optional distribution commands have been defined (Block 166), the user 100 then terminates (Block 168) access to the messaging service application, for example, by terminating the phone call. On the other hand, if no optional distribution commands are defined, then the phone call will also terminate. In short, with the optional distribution commands, a user can configure the messaging service application to process recorded information, if needed, and distribute that information to other communication channels, as desired.

Once the user has, after providing all the information to be recorded and all distribution instructions, terminated communication to the application, the application may then act on the instructions provided (Block 170), such as translation from one media form to another with the help of (Block 172). More specifically, after receiving, recording, and capturing the voice messages, the messaging service application can then translate or convert the voice service messages into text messages via a voice recognition technology. The recorded voice messages may also remain unprocessed and remain as a voice message for transmission. The recorded voice messages may also be command codes that are deciphered or translated into an understandable media via voice recognition technology. In addition, the messaging service application can also convert the voice message requests into a new format, such as a form document for the user to access later, for example, on the Internet. Furthermore, the translated and converted voice or text messages may also be stored in a format in accordance with the user's defined optional distribution commands. If the messaging service application stores the message on the Internet, it can generate periodic reminders to the user informing him of the service messages stored on the Internet until the user chooses disposes of the processed service messages. This not only allows the user access to the information at anytime, but also at his convenience.

In addition to storing the service messages on the Internet, the captured voice messages may also be processed, and these processed service messages are transmitted to the application/media server 108 connected to the mobile network 104. The purpose of the application/media server 108 is to receive and relay the processed service messages to a user-defined application (discussed below). The relay can be accomplished through an Internet protocol (IP) network 110 or in accordance with the user defined optional distribution commands, as discussed above. The messages will typically be generated and formatted for each notification, along with any media attachments, and the messages will be sent via the appropriate designated/provided services (Block 174). Moreover, records of executed actions by the message service may be generated when the action is taken, and used to generate log entries (Block 176) associated with the user's account. For example, such logs may also be used to maintain records of all communications/notifications, as well as success/failure status, for viewing by the user at some later time.

In one embodiment, one of the user-defined applications is the distribution of the processed service messages as an email to an email account of the user 112, or to the email account of a third party 114. The third party 114 may be anyone, including a personal administrative assistant, a spouse, a client or a patient. The third party 114 can then access the processed service messages distributed as an email. If the processed service message is delivered as an email to the user and the user later accesses his email application, the processed service message can immediately become available as an incoming email. If the user chooses not to access the email immediately from his own email account, he can later access the email from any computer 118 and at his own convenience. However, if the user can access email via his mobile phone, then the information can be immediately displayed while the user is still mobile.

For example, after making an appointment with a medical office, the user may have acquired the address of the office, but failed to ascertain directions. Uncertain as to the exact location, the user may access the messaging service application whereupon his voice message of a physical address is translated and converted into a physical map of the office and sent as an email to his email address. By instantaneously accessing his email with his mobile phone, the user will then in turn have a readily accessible mobile map, which is extremely valuable, especially when the user is mobile and does not have the means of stopping to look up or write down directions.

In another embodiment, the processed service messages may also be converted into a form document and sent to the user's personal calendar server 116. In addition, the processed service messages may also be converted into other applications programmed for automated entries into an appointment book or a billing application. This may require additional software programming and configuration. Upon delivery to the user's own personal calendar, the processed service messages can automatically update themselves within the user's calendar program. Like with email, the user can also access his personal calendar at any computer 118 and at his own convenience. If the user chooses not to access his personal calendar immediately, the computer server 116 may send out notifications and updates via email, session initiated protocol, or other methods depending on the level of integration. Furthermore, a new calendar or other application capable of accepting automated emails, extracting the identity, security, and applicable data within the email, and provide a link to the user's application to create a record, such as a meeting or an appointment, may be necessary. In yet a further embodiment, the processed service messages may also be distributed as a voice mail, a page to a pager, or even as an automatic telephone call.

An example of how a professional, such as a doctor or a lawyer, could use a personal productivity platform or system as disclosed herein is illustrated in FIGURE 2. Assume for the moment that a doctor 200 has finished meeting with his patient, at Block 202, and has collected all the necessary medical information. As a reminder for a follow-up appointment with the patient, at Block 202, the doctor 200 can access the messaging service application, at Block 204, with his mobile phone on a mobile network by a variety of options, as discussed earlier. Once access to the messaging service application has been accepted, the doctor 200 can record, at Block 206, the medical information, any medical prescriptions, or follow-ups he might have to do prior to meeting with the patient for a subsequent appointment. The doctor 200 can then also define how he would like to receive the information with optional distribution functions and commands. The messaging service application receives and records these voice messages, and may or may not translate or convert them into text messages depending on what additional distribution commands the doctor 200 has chosen.

At Block 208, the application/media server attached to the mobile network subsequently picks up the processed messages and transmits them according to the doctor's 200 standard pre-programmed distribution methods, as well as any optionally defined distribution commands, as seen in Block 210. For example, the doctor 200 may have programmed or chosen email as his standard method of receiving the messages, but may wish to add an additional mode of distribution, such as a voice mail. In doing so, an email containing the processed message would then be sent to his email account and, in addition, a voice mail would also be generated in his voice mail inbox at the same time.

Likewise, a lawyer 200 after meeting with his client, at Block 202, can access the messaging service application, at Block 204, to record and update any client billing information or charges, shown in Block 206. Them, the application/media server receives and relays, at Block 208, the processed message to the user-defined application, at Block 210. In the case of the lawyer 200, the voice messages may be received and recorded as a voice message and be translated and converted into text messages. Furthermore, a new calendar or other user-defined application, at Block 210, may have the capability of accepting the processed messages as an automated email, and extract the identity, security, and the applicable client data, and provide a link to the lawyer's software program to create an automatic record and entry, such as the client's charges for the day.

The following features, separately or in any combination, may also constitute advantageous embodiments of the described and/or claimed invention:
- The described and/or claimed system, wherein the mobile communication device is a cellular telephone and the mobile communication is a cellular telephone call;
- The described and/or claimed system, wherein the distribution commands are preset by the user before the mobile communication;
- The described and/or claimed system, wherein the messaging service application transmits service messages over the mobile communication network to the user's mobile communication device;
- The described and/or claimed system, wherein the messaging service application is automatically initiated or launched at the end of the mobile communication;
- The described and/or claimed system, wherein the messaging service application functions using novice or expert command modes, each based on the complexity of functions available to the user;
- The described and/or claimed system, wherein the messaging service application is further configured to process the service message before delivering it to the user;
- The described and/or claimed system, wherein the messaging service application is configured to deliver the service message to the user through an application program of the user;
- The described and/or claimed system, wherein the user application is selected from the group consisting of the user's email program, the user's instant messaging program, the user's calendar program, the user's mobile phone, the user's pager, and the user's fax machine;
- The described and/or claimed system, wherein the messaging service application is configured to deliver the service message to a third party user;
- The described and/or claimed system, wherein the service message is a verbal service message;
- The described and/or claimed method, wherein the mobile communication device is a cellular telephone and the mobile communication is a cellular telephone call;
- The described and/or claimed method, further comprising distributing the service message to the user at the later time based on distribution commands;
- The described and/or claimed method, wherein the receiving and delivering are accomplished by an application/media server connected to the communication network;
- The described and/or claimed method, wherein delivering comprises delivering the service message to the user's mobile communication device;
- The described and/or claimed method, wherein receiving the service message from the user further comprises the user manually launching a messaging service application configured to receive the service message in response to the terminating of the mobile communication;
- The described and/or claimed method, wherein manually launching the messaging service application comprises employing at least one selected from the group consisting of double-clicking the end button on a mobile phone, dialing a pre-determined phone number, dialing a pre-defined feature code, and speaking an access command;
- The described and/or claimed method, further comprising processing the service message before delivering it to the user;
- The described and/or claimed method, wherein the processing comprises at least one selected from the group consisting of receiving and recording voice messages, translating voice messages, and converting voice messages into text messages;
- The described and/or claimed method, wherein the delivering further comprises delivering the service message to a third party.

It will be appreciated by those of ordinary skill in the art that the invention can be embodied in other specific forms without departing from the spirit or character thereof. The presently disclosed embodiments are therefore considered in all respects to be illustrative and not restrictive. The scope of the inventions is indicated by the appended claims rather than the foregoing description, and all changes that come within the meaning and ranges of equivalents thereof are intended to be embraced therein.

Additionally, the section headings herein are provided for consistency with the suggestions under 37 C.F.R. § 1.77 or otherwise to provide organizational cues. These headings shall not limit or characterize the invention(s) set out in any claims that may issue from this disclosure. Specifically and by way of example, although the headings refer to a "Technical Field," the claims should not be limited by the language chosen under this heading to describe the so-called technical field. Further, a description of a technology in the "Background" is not to be construed as an admission that technology is prior art to any invention(s) in this disclosure. Neither is the "Summary of the Invention" to be considered as a characterization of the invention(s) set forth in the claims found herein. Furthermore, any reference in this disclosure to "invention" in the singular should not be used to argue that there is only a single point of novelty claimed in this disclosure. Multiple inventions may be set forth according to the limitations of the multiple claims associated with this disclosure, and the claims accordingly define the invention(s), and their equivalents, that are protected thereby. In all instances, the scope of the claims shall be considered on their own merits in light of the specification, but should not be constrained by the headings set forth herein.

## Claims

1. A personal messaging system, comprising:
one or more mobile communication devices having mobile service provided via a communication network; and
a messaging service application connected to the communication network, the messaging service application configured to receive a service message from a user via the one or more mobile communication devices in response to the termination of a mobile communication by the user on the one or more mobile communication device, and to deliver the service message to the user at a later time.

2. A system according to claim 1, wherein the messaging service application further comprises distribution commands that control the delivery of the service message to the user at the later time.

3. A system according to claim 1, wherein the messaging service application is configured to run in an application/media server connected to the mobile communication network.

4. A system according to claim 1, wherein the messaging service application is manually initiated or launched by the user at the end of the mobile communication.

5. A system according to claim 4, wherein the manual initiation of the messaging service application is selected from the group consisting of double-clicking the end button on a mobile phone, dialing a pre-determined phone number, dialing a pre-defined feature code, and speaking an access command.

6. A method of providing personal messaging, the method comprising:
sending a mobile communication by a user with a mobile communication device across;
terminating the mobile communication;
receiving a service message from the user via the mobile communication device in response to the terminating of the mobile communication; and
delivering the service message to the user at a later time.

7. A method according to claim 6, further comprising presetting the distribution commands before sending the mobile communication.

8. A method according to claim 6, wherein receiving the service message from the user further comprises automatically launching a messaging service application configured to receive the service message in response to the terminating of the mobile communication .

9. A method according to claim 6, wherein delivering comprises delivering the service message to the user through an application program of the user.

10. A method according to claim 9, wherein the delivering comprises at least one selected from the group consisting of sending an email to the user, calendaring an item on the user's calendar program, placing a call to the user's mobile phone, sending an instant message to the user, making a page on the user's pager, and sending a document to the user's fax machine.
